# EUROPEAN PATENT SPECIFICATION

(11) **EP 0 696 466 B1**
(45) Date of publication and mention of the grant of the patent: **12.11.1997**
(21) Application number: 95110330.8
(22) Date of filing: 03.07.1995
(51) Int. Cl.: B01D 21/02

(54) **Household liquid settling apparatus**
Flüssigkeitsabsetztank für den Haushalt
Appareil domestique pour la sédimentation

(30) Priority: 01.08.1994 IT PN940047
(43) Date of publication of application: 14.02.1996
(73) Proprietor: PLASTAL - ZCP S.p.A., 33170 Pordenone (IT)
(72) Inventor: Zanot, Roberto, I-33080 Porcia, Pordenone (IT)
(74) Representative: Giugni, Valter

(56) References cited:
- DE-A- 2 500 744
- DE-U- 7 720 811
- PATENT ABSTRACTS OF JAPAN, vol. 1, no. 24 (M-1966), 26 March 1977

## Description

The present invention refers to an apparatus, for use in households, for settling waste water being discharged from different water utilization applications in the home, such as a washing machine, a dishwasher or similar equipment.

Although an apparatus for treating discharge liquors from a clothes washing machine is illustrated in the following description for greater simplicity in describing the invention and greater effectiveness in exemplifying an embodiment thereof, it will be appreciated that the same apparatus according to the present invention extends to cover a wide variety of home appliances and apparatuses sharing the basic feature of using water and discharging only partially or, anyway, not heavily soiled water into the environment, such a discharge water being therefore capable of being appropriately treated in view of reducing its environmental impact when eventually discharged.

It is a widely known fact that all major home appliance manufacturers and detergent producers are constantly making any possible effort in view of reducing both the energy utilization records of their appliances and the emissions of polluting substances into the environment. Such efforts are due to both a growing environment awareness among the consumers and the increasingly stringent constraints imposed by the various laws and regulations. The ultimate result of such a situation can be summarized in the fact that the ecological challenge has turned into an all-important competition ground for manufacturers and producers in general, who are actually striving to come out with products that are not only less and less demanding as far as their needs of energy, chemicals and water are concerned, but also less and less polluting as far as their emissions into the environment are concerned.

In the wake of this evolution, a quite significant progress has already been made in terms of energy and water saving effects in the use of household laundry appliances. However, efforts aimed at achieving further reductions in this connection are still going on in view of reaching the twofold advantage of a lower consumption of water, which already is an inherently appreciable result, and a lower environmental impact resulting from the basic assumption that a smaller amount of water taken in from and discharged into the environment would then result in an accordingly smaller amount of polluting substances emitted into the environment.

Clothes washing machines are also known which require an altogether reduced amount of water to complete a full washing programme owing to the fact that they are provided with a recovery reservoir which is adapted to collect and store the water being discharged from the last rinse cycles in view of re-using it during the washing phase of a subsequent washing programme. Clothes washing machines are further known which are provided with filtration apparatuses, in particular such apparatuses operating according to the reverse-osmosis principle, in order to be capable of recovering and filtering the water to be then used in subsequent washing cycles, being it a widely known fact that such water should be as clean as possible.

However, such types of washing machines are necessarily complicated in their construction and, therefore, quite expensive. They further have a major functional drawback in that storing substantially soiled or contaminated water in sealed containers gives inevitably rise to undesirable effects as far as hygiene is concerned.

Furthermore, the basic assumption according to which a smaller amount of water used by the appliance would result in an accordingly smaller environmental impact is true only in part since, if it is true on the one hand that the amount of polluted water is reduced, on the other hand it is equally true that the amount of detergent used to remove a given amount of soil is substantially constant when the amount of water used changes within certain limits, so that the amount of pollutants that are emitted into the environment is not eventually reduced to any significant extent in absolute terms.

The need therefore arises to rely on the availability of an apparatus for the treatment of waste water, which is adapted to retain most of the soiling substances and contaminants suspended therein and to enable such substances and contaminants to be removed and eliminated from the water before the same water is emitted again into the environment.

It is the purpose of the present invention to describe such an apparatus having the features as substantially described by way of non-limiting example with particular reference to the appended claims and the accompanying drawings, in which
- Figure 1 is a schematical view of the ideal arrangement in relation to a clothes washing machine of the apparatus according to the present invention;

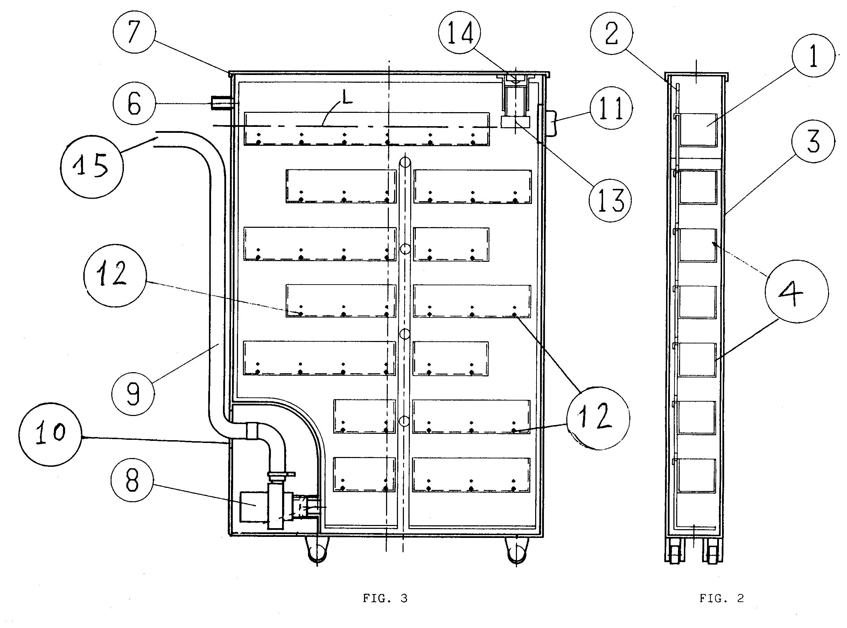

- Figure 2 is a view of a vertical side section of the apparatus according to the present invention;
- Figure 3 is a view of a vertical front section of the apparatus according to the present invention;

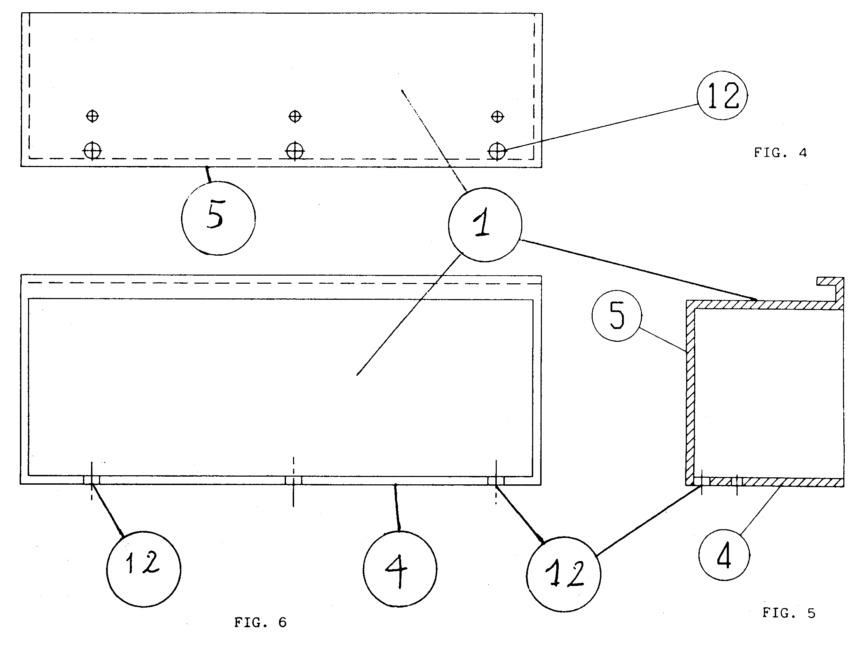

- Figure 4 is a front vertical view of a detail of the apparatus according to the present invention;
- Figure 5 is a view of a vertical side section of the detail shown in Figure 4; and
- Figure 6 is a horizontal section view of the detail shown in Figure 4.

The above listed Figures illustrate an apparatus comprising a plurality of similar reservoirs 1, which have the shape of rectangular plane-section pans and are arranged upon each other as supported and appropriately spaced from each other by a rigid frame 2 which may be given different forms according to actual requirements, as anyone skilled in the art is able to immediately identify, but is anyway capable of enabling said plurality of reservoirs to be handled jointly and globally.

The upper side of said reservoirs is wide open and the reservoirs themselves are arranged so as to be able to hold the largest possible amount of liquor and therefore are positioned horizontally. They are adapted to be removably contained in a single container 3 extending vertically in the form of a parallelepiped and being so sized in the horizontal plane as to be able to precisely contain the structure constituted by said plurality of reservoirs, the latter being capable of being inserted in and/or taken out of said container by means of appropriate means, such as for instance handles.

At least a side wall 4 of each reservoir is provided with at least an opening 12, but preferably with a plurality of such openings arranged along a lower edge 5 of said wall in order to enable the liquor to gradually percolate from the reservoir to the outside thereof without bringing about excessive turbulences that might agitate the substances which have in the meanwhile settled onto the bottom of the reservoirs.

Said container is further provided with an inlet nozzle 6 located on a side wall thereof and arranged close to upper edge 7 of said side wall.

In a lower portion of said container there is provided a compartment accomodating an exhaust pump 8 which takes in the liquor from the bottom of said container and delivers it into a conduit 9 which is arranged to discharge outside by passing through an appropriate opening 10 provided in a side wall of said container.

The level at which said opening 10 is located is slightly below the level at which said inlet nozzle 6 is provided, so that an overflow-type drain is automatically provided. In fact, if the liquor flowing in through said inlet nozzle 6 reaches the level of said opening 10, the excess liquor will then automatically flow outside the container by passing through said pump 8, said conduit 9 and, therefrom, to the outside on the basis of the principle of communicating vessels.

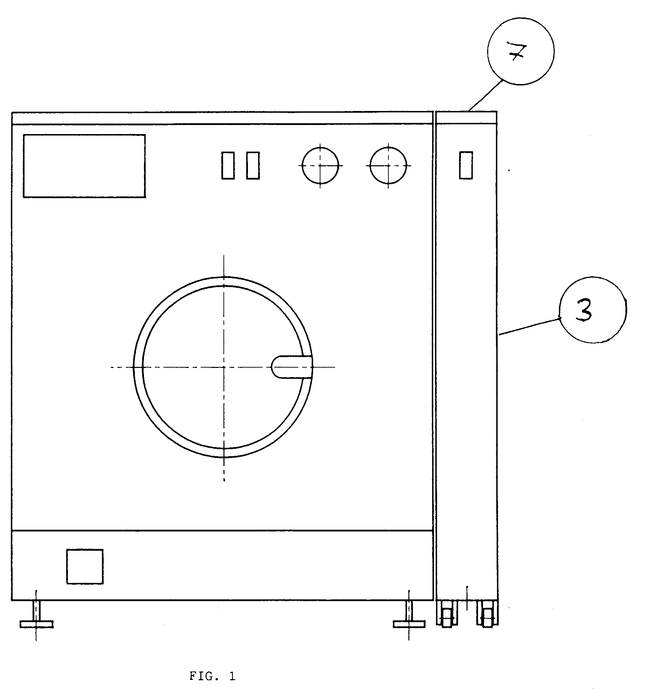

The operation of the apparatus is as follows: the apparatus is placed in the vicinity of a clothes washing machine and the discharge pipe of said washing machine is inserted into and the outlet nozzle thereof is locked in place within the upper reservoir, as this is shown in Figure 1.

During the various programme phases in which the washing machine is due to discharge the liquor contained therein, ie. after the washing and the rinsing cycles, said discharge liquor is poured into the apparatus according to the present invention and flows into the container by passing through the inlet nozzle 6.

As the liquor being discharged by the washing machine (not shown) flows into said container, it fills up said container and, as its level therein mounts, it successively fills up also the various reservoirs provided inside said container.

When the washing machine stops upon completion of the washing programme, the whole amount of liquor successively discharged by it during said programme will therefore have been poured into the apparatus according to the invention and substantially distributed in the various reservoirs provided therein, where it left to settle down until the next washing programme is started.

During such a period of time between two successive washing programmes, which can be prolonged also to a considerable extent, the liquor is therefore able to undergo a natural decantation process, which is generally well-known in its characteristics and therefore is not illustrated here any further, at the end of which the decanted substances settle down onto the bottom of the various reservoirs.

At this point, the user will perceive it as an obvious step to actuate said pump 8 by means of appropriately provided control means, which are not shown in the drawings and are preferably arranged on the upper portion of the container, so as to enable said pump to suck in the liquor from the bottom of the container and deliver it outside through said conduit 9.

Being arranged in the afore described manner, the openings 12 ensure that, when the level of the liquor in the container lowers to a level underneath the bottom of each single reservoir in the container, the liquor contained in said reservoir starts to slowly flow off said reservoir without disturbing the sediment settled on the bottom thereof, so as to empty said reservoir and and collect itself in said suction compartment of the pump 8. From here it will be then discharged until the whole amount of liquor contained both in the reservoirs and the void spaces, or anyway in the volumes of the container that are not occupied by the reservoirs, is exhausted.

After having been decanted and discharged in the above described manner, the liquor can at this point be definitively let into the environment since it is now considerably purified from the substances of any type, in particular the heavy ones, that are originally present in the liquor as discharged from the various phases of the washing programme performed by the washing machine.

Once the liquor has in such a way been removed from the reservoirs and the container, it will be possible to take out the plurality of reservoirs from the container in order to remove, for instance mechanically, the sludge and any other possible substances, detergent residues and the like, that have settled on the bottom thereof, so that they can eventually be disposed of in an environmentally sustainable manner.

It has been both practically and experimentally demonstrated that the operation of the apparatus is particularly effective if the polluting residues are not removed after each washing process, but rather after a certain number of washing processes, so that the required extent of manual handling can be reduced without substantially reducing the amount of substances being retained. To this purpose, in fact, the user is only required to shortly actuate the afore cited exhaust pump 8, in order to discharge the decanted liquor from the container, immediately before starting a new washing process, so that the apparatus is readily adapted to accomodate the liquor from the new process and the polluting substances introduced with the liquor from the successive washing cycles are able to settle so as to form successive layers of sediment without disturbing to any appreciable extent the previously subsided layers when the respective reservoirs are being emptied.

A further improvement is achieved by providing the anti-overflow safety system as described below. It may in fact occur that the discharge conduit 9 is inadvertently arranged by the user so as the corresponding outlet mouth 15 thereof comes to find itself located in a position which is not only higher than the drain opening 10, but also higher than the highest filling level of the container 3.

Under such circumstances, the admission of liquor into the container would not be counterbalanced by the fact that, upon reaching the level of said drain opening 10, the liquor starts to flow off the container, due to the difference of level existing between said drain opening 10 and the respective outlet mouth 15, but would rather go undisturbedly on until the liquor actually reaches the level at which it starts to flow over the rim of the container 3.

In view of preventing this from happening, a safety float valve 13 is appropriately arranged in association with a suitable switch 14 at a safety level L which is appropriately lower than the level at which the liquor starts to flow over the container, said switch 14 being arranged so as to be capable of cutting off the operation of the washing machine and, therefore, stopping the admission of liquor into the container. Under the circumstances, if the case occurs that the outlet mouth 15 of the conduit 9 is situated at a higher level than the overflow level, when the level of the liquor admitted into the container 3 rises to the point that it actuates said safety float valve 13, the switch 14 associated therewith will trip to cut out the operation of the washing machine and, as a result, to stop the admission of liquor into the container.

While the present invention has been described by way of example with reference to preferred embodiments thereof, using a generally known terminology, it will be appreciated that it is not limited thereby.

## Claims

1. Waste water settling apparatus for use in a household environment, comprising a plurality of open reservoirs (1) removably inserted one above another in a container (3) closed at its bottom and all along its sides, **characterized in that** said container (3) is provided with an inlet nozzle (6) near the upper edge (7) of a side wall thereof and with an exhaust pump (8) arranged in a lower portion thereof for the discharge of the liquor collected in said container, said reservoirs (1) being provided with at least a small-sized opening (12) located along a lower edge (5) thereof.

2. Waste water settling apparatus according to claim 1, **characterized in that** said small-sized opening (12) is provided on a side wall (4) of said reservoir (5).

3. Waste water settling apparatus according to claim 1 or 2, **characterized in that** the delivery side of said exhaust pump (8) is connected to a discharge conduit (9) passing through an appropriate opening (10) provided in a side wall of said container (3) at a level below the level of said inlet nozzle (6).

4. Waste water settling apparatus according to any of the precedent claims, **characterized in that** at least a plurality of said reservoirs (1) is supported by a rigid structure (2) adapted to keep them together in a stable manner, the said structure (2) being capable to be removed from said container (3).

5. Waste water settling apparatus according to any of the precedent claims, **characterized in that** at least a plurality of said reservoirs (1) are in the shape of a parallelepiped-shape pan which is only open on top.

6. Waste water settling apparatus according to any of the precedent claims, **characterized in that** it is provided with float valve means (13), adapted to detect the height of the level of the liquor in said container (3) and associated with switching means (14) which are adapted to cut off the admission of liquor into the container (3).

7. Waste water settling apparatus according to claim 6, **characterized in that** said switching means (14) are actuated by said float valve means (13) whenever the level of the liquor in said container (3) reaches a predetermined safety level (L) situated below the overflow level of the container (3).

## Patentansprüche

1. Schmutzwasserabsetztank zur Verwendung in einer Haushaltsumgebung, der eine Vielzahl offener Becken (1), die entnehmbar eines über dem anderen in einem Container (3), der an seiner Unterseite und entlang aller seiner Seitenflächen geschlossen ist, eingesetzt sind, enthält, **dadurch gekennzeichnet, daß** der Container (3) mit einem Einlaßstutzen (6) nahe der oberen Kante (7) von einer seiner Seitenwände und mit einer in seinem unteren Bereich angeordneten Saugpumpe (8) zum Ablassen von im Container gesammelter Flüssigkeit ausgestattet ist und daß die Becken (1) mit zumindest einer klein bemessenen, entlang einer deren unteren Kanten (5) angeordneten Öffnung (12) ausgestattet sind.

2. Schmutzwasserabsetztank gemäß Anspruch 1, **dadurch gekennzeichnet, daß** die klein bemessene Öffnung (12) an einer Seitenwand (4) des Beckens (5) vorgesehen ist.

3. Schmutzwasserabsetztank gemäß Anspruch 1 oder 2, **dadurch gekennzeichnet, daß** die Austrittseite der Absaugpumpe (8) mit einer Abflußleitung (9) verbunden ist, die durch eine passende, in einer Seitenwand des Containers (3) auf einer Höhe unterhalb der Höhe des Einlaßstutzens (6) vorgesehene Öffnung (10) geführt wird.

4. Schmutzwasserabsetztank gemäß den vorhergehenden Ansprüchen, **dadurch gekennzeichnet, daß** mindestens eine Mehrzahl der Becken (1) an eine feste Strukter (2), die sie in einer stabilen Weise zusammenhält, angelehnt ist und daß die Strukter (2) vom Container (3) abnehmbar ist.

5. Schmutzwasserabsetztank gemäß den vorhergehenden Ansprüchen, **dadurch gekennzeichnet, daß** mindestens eine Mehrzahl der Becken (1) die Form von einem parallelepiped-geformten Gefäß besitzen, das nur oben offen ist.

6. Schmutzwasserabsetztank gemäß den vorhergehenden Ansprüchen, **dadurch gekennzeichnet, daß** er mit Schwimmerventilmitteln (13) ausgestatten ist, die zur Anzeige der Höhe des Flüssigkeitsstands im Container (3) geeignet und mit Schaltmitteln (14) verbunden sind, die dazu geeignet sind, die Flüssigkeitszurfuhr in den Container (3) abzuriegeln.

7. Schmutzwasserabsetztank gemäß Anspruch 6, **dadurch gekennzeichnet, daß** die Schaltmittel (14) von den Schwimmerventilmitteln (13) gesteuert werden, wann immer der Flüssigkeitsstand im Container (3) einen vorbestimmten Sicherheitsstand (L) erreicht, der unterhalb der Stauhöhe des Containers (3) liegt.

## Revendications

1. Appareil de sédimentation d'eaux usées à utiliser dans un environnement domestique, comprenant une pluralité de réservoirs ouverts (1) insérés, de façon amovible, l'un au-dessus de l'autre dans un conteneur (3) fermé au niveau de son fond et le long de tous ses côtés, **caractérisé en ce que** ledit conteneur (3) est muni d'une buse d'entrée (6) près du bord supérieur (7) d'une de ses parois latérales et d'une pompe d'aspiration (8) agencée dans une de ses parties inférieures, pour l'évacuation de la substance liquide recueillie dans ledit conteneur, lesdits réservoirs (1) étant munis d'au moins une ouverture de petite taille (12) située le long d'un de leurs bords inférieurs (5).

2. Appareil de sédimentation d'eaux usées selon la revendication 1, **caractérisé en ce que** ladite ouverture de petite taille (12) est réalisée sur une paroi latérale (4) dudit réservoir (5).

3. Appareil de sédimentation d'eaux usées selon la revendication 1 ou 2, **caractérisé en ce que** le côté refoulement de ladite pompe d'aspiration (8) est relié à une conduite d'évacuation (9) passant à travers une ouverture appropriée (10) réalisée dans une paroi latérale dudit conteneur (3) à un niveau inférieur au niveau de ladite buse d'entrée (6).

4. Appareil de sédimentation d'eaux usées selon l'une quelconque des revendications précédentes, **caractérisé en ce qu'**au moins une pluralité desdits réservoirs (1) est supportée par une structure rigide (2) conçue pour les conserver ensemble de manière stable, ladite structure (2) étant capable d'être retirée dudit conteneur (3).

5. Appareil de sédimentation d'eaux usées selon l'une quelconque des revendications précédentes, **caractérisé en ce qu'**au moins une pluralité desdits réservoirs (1) est sous la forme d'un bac semblable à un parallélépipède qui est seulement ouvert sur le dessus.

6. Appareil de sédimentation d'eaux usées selon l'une quelconque des revendications précédentes, **caractérisé en ce qu'**il est muni de moyens formant vanne à flotteur (13), conçus pour détecter la hauteur du niveau de la substance liquide dans ledit conteneur (3) et associés à des moyens de commutation (14) qui sont conçus pour couper l'admission de substance liquide dans le conteneur (3).

7. Appareil de sédimentation d'eaux usées selon la revendication 6, **caractérisé en ce que** lesdits moyens de commutation (14) sont mis en oeuvre par lesdits moyens formant vanne à flotteur (13) toutes les fois que le niveau de la substance liquide dans ledit conteneur (3) atteint un niveau de sécurité prédéterminé (L) situé au-dessous du niveau de débordement du conteneur (3).
